# EUROPÄISCHE PATENTANMELDUNG

(11) **EP 4 190 584 A1**
(43) Veröffentlichungstag der Anmeldung: **07.06.2023**
(21) Anmeldenummer: 22201798.0
(22) Anmeldetag: 17.10.2022
(51) Int. Cl.: B60B 27/02, B62J 45/413, B62J 45/423, B62J 99/00, B60B 27/00, B60B 1/00

(54) **MAGNETHALTER ROAD**

(30) Priorität: 01.12.2021 DE 202021106547 U
(71) Anmelder: K.W.H. Ciclosport Vertriebs GmbH, 82166 Gräfelfing (DE)
(72) Erfinder: Die Erfindernennung liegt noch nicht vor
(74) Vertreter: Wunderlich & Heim Patentanwälte Partnerschaftsgesellschaft mbB

(57) **Zusammenfassung**

Die Erfindung betrifft eine Magnethalterung zur Fixierung eines Magneten an einem Bike-Rad, wobei das Bike-Rad eine am Bikerahmen fixierte Radachse und eine darum drehbare Nabe mit daran fixierten Radspeichen und eine mit der Nabe fest verbundene Bremsscheibe aufweist. Die Magnethalterung weist eine mit der Nabe in Achsrichtung verbindbare Scheibe auf, die eine Öffnung mit Formschlussmitteln hat, die mit komplementären Formschlussmitteln der Bremsscheibe oder der Nabe in Eingriff bringbar sind. Erfindungsgemäß ist vorgesehen, dass die Scheibe als Fixierscheibe für den Magneten an der Bremsscheibe oder der Nabe ausgelegt ist und dass die Formschlussmittel um die Öffnung als senkrecht von der Fixierscheibe abstehende Raststege ausgebildet sind sowie dass im montierten Zustand diese Raststege kraft- und/oder formschlüssig in eine Innenverzahnung der Bremsscheibe oder der Nabe eingreifend ausgebildet sind.

## Beschreibung

Die Erfindung betrifft eine Magnethalterung zur Fixierung eines Magneten an einem Bike-Rad, insbesondere einem Rennrad, gemäß Oberbegriff des Anspruchs 1.

Eine derartige Magnethalterung ist aus der DE 202018106421 U1 bekannt. Die darin beschriebene Magnethalterung ist insbesondere für Mountainbikes (MTB) geeignet, da diese üblicherweise robuster aufgebaut sind und das Bike-Rad selbst eine größere Breite, das heißt eine längere Radachse mit darauf drehbarer Nabe hat.

Der aus dieser Druckkraft bekannte Magnet und dessen Scheibe werden mittels eines Spannbandes oder Spanngummis mit einem Durchgriff durch die Bremsscheibe daran fixiert.

Diese bekannte Magnethalterung ist daher hinsichtlich der Fixierung an der Nabe oder der Bremsscheibe verbesserungsbedürftig. Auch hat sich gezeigt, dass sich diese bekannte Anordnung für schmale Räder wie bei Rennrädern mit einer relativ kurzen Gesamtlänge der Achse, nicht besonders eignen.

Der in dieser Anmeldung angesprochene Magnet ist zweckmäßigerweise ein Permanentmagnet, der wie in der genannten Druckschrift die Funktion hat, bei jeder Drehung des Bike-Rades einen Impuls in einem Magnetsensor zu erzeugen, über den die Geschwindigkeit und/oder die Fahrstrecke etwa des Rennrades erfasst wird.

Die Verwendungszwecke einer entsprechenden Magnethalterung und die damit ableitbaren Daten sind analog zur genannten Druckschrift hinreichend bekannt. Auch eignet sich die genannte Magnethalterung zur Nachrüstung und zum Eigeneinbau des entsprechenden Bike-Rades.

Unter Berücksichtigung der vorausgehend genannten Aspekte liegt daher diese Erfindung die **Aufgabe** zugrunde, eine gattungsgemäße Magnethalterung relativ kostengünstig herstellen zu können und einen einfachen Einbau auch als Nachrüstung, an Nabe oder Bremsscheibe zu ermöglichen, womit eine eindeutige, feste Fixierung der Magnethalterung am Bike-Rad erreicht wird.

Diese Aufgabe wird bei einer gattungsgemäßen Magnethalterung mit den weiteren Merkmalen des Anspruches 1 gelöst.

Hierzu wird die Scheibe als Fixierscheibe für den Magneten an der Bremsscheibe oder der Nabe ausgelegt, wobei die Formschlussmittel um die Öffnung der Fixierscheibe als senkrecht von der Fixierscheibe abstehende Raststege ausgebildet sind, und
im montierten Zustand diese Raststege kraft- und/oder formschlüssig in eine Innenverzahnung der Bremsscheibe oder der Nabe eingreifend ausgebildet sind.

Ein Kerngedanke der Erfindung ist, die den Magneten aufweisende Fixierscheibe in einfacher Weise in einen rotativ und achsial festen Eingriff mit der Bremsscheibe und der Nabe zu bringen, wobei keine weiteren zusätzlichen Fixiermittel erforderlich sind, und diese Magnethalterung auch für schmale Räder, wie zum Beispiel Rennräder, geeignet zu machen.

Eine weitere wesentliche Idee besteht darin, die Fixierscheibe und die Raststege integriert miteinander auszubilden, wofür eine einstückige Herstellung bevorzugt wird. Die Fixierscheibe sollte aus einem gut stanzbaren und biegbaren Material hergestellt sein. Bevorzugterweise kann dies ein Blechmaterial von etwa 0,6 mm bis 1 mm sein, wobei vorzugsweise auch eine Materialstärke von etwa 0,8 mm gewählt wird. Auch Edelstahl kann für diese Konfiguration mitberücksichtigt werden.

Die Fixierscheibe wird an ihrem schmaleren Ende mit einer Mulde zur Aufnahme des Magneten, was bevorzugt ein Permanentmagnet ist, ausgelegt. Am anderen Ende ist in der Längserstreckung der Fixierscheibe eine Öffnung eingebracht und ausgestanzt mit den im Randbereich etwa senkrecht von der Öffnungsebene abstehenden Raststegen, wobei Öffnung und Raststege komplementär zur Innenfläche oder Innenverzahnung von Nabe oder Bremsscheibe ausgelegt sind.

Im Übergangsbereich der Fixierscheibe zwischen Magnetmulde und Öffnung ist eine Abschrägung beziehungsweise Neigung der Fixierscheibe vorgesehen, die es zum Beispiel im montierten Zustand mit der Innenverzahnung der Bremsscheibe, ermöglicht, dass der Magnet sehr nahe zur Oberfläche eines Radialsteges der Bremsscheibe gelangt. In einer Konfiguration mit sehr dünnem Blech, kann dann ein magnetischer Schluss zwischen Fixierscheibe und radialem Bereich der Bremsscheibe bestehen, wobei jedoch der auslösende magnetische Impuls an oder auf einen Magnetsensor weiterhin erhalten bleibt.

Im montierten Zustand der Fixierscheibe mit der Bremsscheibe kann daher der den Magneten enthaltende Endbereich der Fixierscheibe magnetisch gegen die Bremsscheibe angezogen werden oder an dieser anliegen.

Herstellungstechnisch kann die Fixierscheibe aus einem Materialstück, zum Beispiel einem Blechmaterial mit etwa 0,8 mm Stärke, gefertigt werden. Üblicherweise wird hierzu ein Stanzvorgang im größeren abgerundeten Bereich durchgeführt, um hierdurch die Öffnung mit ihrem Innendurchmesser zu schaffen, wobei auch die Raststege als Radialstege in der Ebene des Blechmaterials erzeugt werden können.

Hierbei kann auch ein Ausstanzen der Hinterschnittbereiche am Materialübergang zwischen den Radialstegen und dem kreisförmigen Innenbereich am inneren Randbereich der Öffnung der Fixierscheibe vorgesehen werden. Des Weiteren ist ein Aufbiegeschritt der Radialstege und ein bogenförmiges Abbiegen der Endstege mit nach innen zeigender Endfläche vorgesehen.

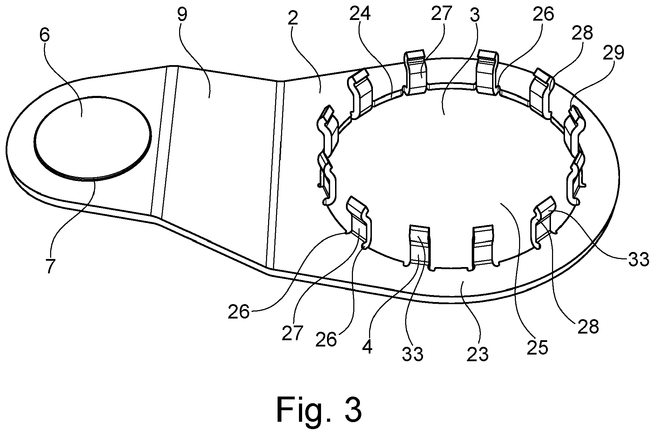

Diese Herstellungsschritte führen dann zur Konfiguration (siehe Fig. 3) mit etwa senkrecht vom Blechmaterial nach oben stehendem aufgebogenen Mittelsteg und dem gerundeten Endsteg am oberen Bereich, dessen Endfläche nach innen weist.

Die kreisförmige Magnetmulde und die im Zwischenbereich der Fixierscheibe vorgesehene Abschrägung können mit Präge- und Biegeschritten in Blechmaterial der Fixierscheibe realisiert werden.

Die Raststege werden vorteilhaft aus dem Material der Fixierscheibe mit Hinterschnitt ausgestanzt, mit einem senkrecht hochstehenden Mittelsteg aufgebogen und mit einem endseitigen gebogenen Endsteg, der einen nach innen zeigende Endfläche aufweist, erstellt.

Die Raststege erhalten herstellungsmäßig eine Ausrichtung und Konfiguration, die einen Kraft- und/oder Formschluss mit einer Verzahnung der Bremsscheibe und gegebenenfalls einer Innenfläche der Nabenöffnung der Bremsscheibe ermöglichen.

Der obere Endbereich der Raststege weist zweckmäßigerweise eine gebogene Form auf, wobei die Bogenform auf die Öffnung der Fixierscheibe bezogen nach radial außen zeigt, und kann in der weiteren Montage der Fixierscheibe, insbesondere in die Nabenöffnung der Bremsscheibe, als Gleit- und Rastfläche dienen, so dass ein einfaches, insbesondere auch manuelles Einsetzen der Fixierscheibe mit ihren Raststegen in eine entsprechende Nabenöffnung, zum Beispiel der Bremsscheibe, möglich ist.

Nach dem Anbringen der Magnethalterung am Bike-Rad können die Raststege formund/oder kraftschlüssig in eine Innenverzahnung der Nabenöffnung von Bremsscheibe oder Nabe eingreifen.

Im zusammengesetzten Zustand greifen daher die Mittelstege der Raststege formund/oder kraftschlüssig in die Innenverzahnung der Nabenöffnung ein.

Die nach außen weisenden gebogenen Rundungsbereiche der Raststege fungieren bei der Montage als Gleit- und Rastflächen mit der Innenfläche der Nabenöffnung.

Es wird bevorzugt, dass die Höhe der Raststege etwa der Höhe Abschrägung im Zwischenbereich der Fixierscheibe entspricht. Dies gestattet es, dass der Bereich des Magneten, der bevorzugt ein Permanentmagnet ist, an einem der radialen Stege der Bremsscheibe anliegen kann oder sogar magnetisch kraftschlüssig an den radialen Steg angezogen wird.

Der Magnet selbst kann bevorzugt adhäsiv und/oder formschlüssig in der Magnetmulde der Fixierscheibe platziert sein.

Die Erfindung wird nachfolgend anhand eines Beispiels und weitgehend schematischer Zeichnungen näher erläutert. Es zeigen:
- Fig. 1: eine radiale Draufsicht auf den Bereich einer Radnabe mit daran fixierter Bremsscheibe, zum Beispiel eines Rennrades, wobei der Pfeil das Anbringen einer Magnethalterung an der Bremsscheibe andeutet und in Fig. 4 detaillierter dargestellt ist;
- Fig. 2: eine Draufsicht auf eine Fixierscheibe mit einer Abschrägung im Zwischenbereich;
- Fig. 3: eine vereinfachte perspektivische Ansicht einer Fixierscheibe mit etwa vertikal von der Materialebene hochstehenden Raststegen, wobei im Zwischenbereich vom Übergang zu einem kreisförmigen Magneten eine Abschrägung vorgesehen ist; und
- Fig. 4: das Beispiel einer Bremsscheibe in perspektivischer Ansicht mit in der Nabenöffnung der Bremsscheibe eingesetzter Fixierscheibe.

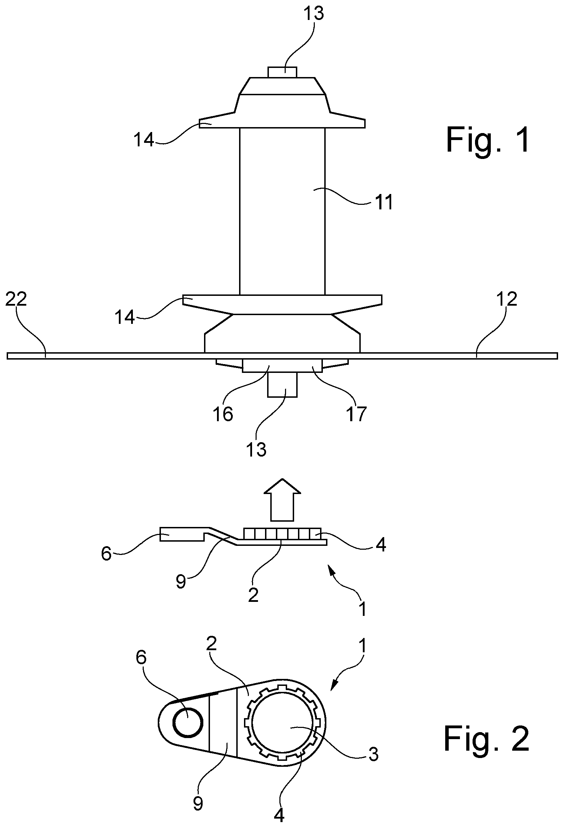

Das in Draufsicht in Fig. 1 dargestellte Beispiel zeigt eine radiale Ansicht einer Nabe 11, zum Beispiel eines Rennrades. Die Nabe 11 ist rotativ um die Achse 13 vorgesehen und ist in Richtung nach unten (entgegen der Pfeilrichtung) mit einer Bremsscheibe 12 drehfest verbunden.

An den Endbereichen der Nabe 11 sind Nabenflansche 14 vorgesehen, an denen üblicherweise die Speichen des Bikes befestigt sind. Mit dem Bezugszeichen 16 ist ein Bremsscheibenring zur rotationsfesten Fixierung der Bremsscheibe 12 mit der Nabe 11 vorhanden.

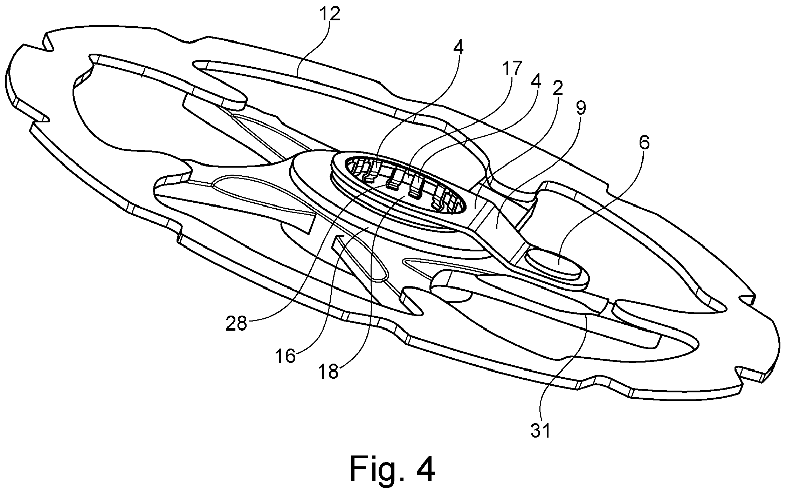

Im Bremsscheibenring 16 beziehungsweise der Nabe der Bremsscheibe 12 selbst ist eine Innenverzahnung 17 vorhanden (siehe Fig. 1), die komplementär zu den Raststegen 4 ausgelegt ist. Durch Einsetzen der Magnethalterung 1 in Pfeilrichtung in die Innennabe der Bremsscheibe 12 wird eine drehfeste Verbindung zwischen Magnethalterung 1 und der Innenverzahnung 17 der Bremsscheibe 12 geschaffen, wie es in Fig. 4 etwas detaillierter dargestellt ist.

Die in Fig. 2 in einer Draufsicht dargestellte Fixierscheibe 2 weist im linken, schmaleren Bereich einen Magneten 6 auf, der bevorzugt als Permanentmagnet mit kreisförmiger Form in einer entsprechenden Mulde fixiert ist. Ein Zwischenbereich der Fixierscheibe 2, der einen Übergang zur größeren Fläche im rechten Bereich darstellt, weist eine Abschrägung 9 auf.

Als Material der Fixierscheibe 2 kann bevorzugt ein leicht zu bearbeitendes Eisenmaterial gewählt werden, zum Beispiel ein Blechmaterial mit einer Stärke von etwa 0,6 mm bis 1 mm und speziell etwa eine Stärke von 0,8 mm. Auch Edelstahl kann dabei eingesetzt werden. Eine gute Bearbeitbarkeit des Materials aber auch seine Steifigkeit und Festigkeit sind wesentlich.

Der nach Fig. 2 rechte Bereich der Fixierscheibe 2 ist mit einer kreisförmigen Öffnung 3 ausgestattet, von deren Randbereich Raststege 4 etwa senkrecht nach oben abstehen.

In Fig. 3 ist eine Fixierscheibe 2 in perspektivischer Ansicht und in etwas präziserer Darstellung als nach Fig. 2 gezeigt. Herstellungsmäßig wird das eingesetzte Flachmaterial, insbesondere ein Blechmaterial, mit geringer Materialstärke, einem Stanzvorgang unterzogen, um aus einem Stück Flachmaterial die Öffnung 3 auszustanzen, wobei gleichzeitig die Raststege 4 als radial nach innen ragende Flachstege miterzeugt werden können.

Ebenfalls kann dieser Stanzschritt die Hinterschnitte 26 erzeugen, so dass ein nachfolgendes Aufbiegen der Raststege 4 in etwa ein vertikales Abstehen vom Randbereich der Öffnung 3 erleichtert wird. Die Endbereiche der Raststege 4 werden als gerundete Endstege 28 hergestellt, deren Endfläche 29 nach innen und oben weist.

Eine Verlängerung der Endflächen 29 der Raststege 4 würde im Beispiel nach Fig. 3 ein fiktives Kegelgebilde mit einer Kegelspitze oberhalb der Öffnung 3 ergeben.

Die durch den gerundeten Endsteg 28 erzeugte Bogenfläche, die nach radial außen weist, bildet beim Zusammenbau von Fixierscheibe 2 mit der Innenfläche der Nabenöffnung der Bremsscheibe 12 eine Gleit- und Rastfläche 33, die nach dem Einsetzen der Fixierscheibe 2 mit deren Raststegen 4 in die Nabenöffnung (siehe Fig. 4) eine rotationsfeste Verbindung mit der Bremsscheibe 12 ergibt.

Der Übergangsbereich zwischen der Öffnung 3 und der in Fig. 3 links vorgesehenen Magnetmulde 7 mit eingesetztem Magneten 6, weist eine Abschrägung 9 beziehungsweise eine Aufbiegung auf. Die Abschrägung 9 kann in der Höhe etwa der Höhe der senkrecht abstehenden Raststege 4 entpsrechen.

Die perspektivische Darstellung einer Bremsscheibe 12 mit eingesetzter Fixierscheibe 2 nach Fig. 4 zeigt, dass eine Fixierscheibe 2 in die Nabenöffnung 18 der Bremsscheibe mit ihren Raststegen 4 eingesetzt werden kann. Die Innenfläche der Nabenöffnung 18 ist hierbei mit einer Innenverzahnung 17 ausgestattet, wobei die eingesetzte Fixierscheibe 2 in die freien Zwischenbereiche der Innenverzahnung 17 mit ihren Raststegen 4, deren Mittelstege 27 und gegebenenfalls den gerundeten Endstegen 28 eingreift. Auf diese Weise wird eine rotationsstarre Verbindung zwischen Bremsscheibe 12 und Fixierscheibe 2 geschaffen.

Die gerundeten Endstege 28 der Raststege 4 können nach Fig. 4 auch unterhalb der Innenverzahnung 17 der Bremsscheibe 12 eine kraftschlüssige Fixierung mit der Nabenöffnung der Bremsscheibe 12 bilden.

In der Darstellung nach Fig. 4 ist gezeigt, dass in diesem Beispiel der Arm der Fixierscheibe 2, welcher den Magneten 6 aufnimmt, dicht an/über einem Radialsteg 31 der Bremsscheibe 12 angeordnet ist.

Abhängig vom Material der Fixierscheibe 2 hat dies den Vorteil, dass ein magnetischer Kraftfluss zwischen dem Radialsteg 31 der Bremsscheibe 12 und dem Magneten 6 der Fixierscheibe 2 erreicht wird, so dass dieser Bereich gegen den Radialsteg 31 gezogen werden kann.

Wird dieser Effekt gewünscht, sollte die Bremsscheibe 12 nicht aus einem a-magnetischen Material, sondern aus ferromagnetischem Material bestehen.

Die wie vorausgehend beschriebene Fixierscheibe 2 schafft daher eine kostengünstige Möglichkeit, den zur Impulsgebung erforderlichen Magneten 6 ortsgenau und präzise an dem rotierenden Element wie einer Bremsscheibe zu fixieren, so dass auch kleinste radiale wie axiale Verschiebungen des Magneten vermieden werden können, und somit eine hohe Messgenauigkeit mit der beschriebenen Magnethalterung erreicht werden kann.

## Patentansprüche

1. Magnethalterung (1) zur Fixierung eines Magneten (6) an einem Bike-Rad, insbesondere einem Rennrad,
wobei das Bike-Rad eine am Bikerahmen fixierte Radachse (13) und eine darum drehbare Nabe (11) mit daran fixierten Radspeichen und eine mit der Nabe (11) fest verbundene Bremsscheibe (12) aufweist,
wobei die Magnethalterung (1) eine mit der Nabe (11) in Achsrichtung verbindbare Scheibe (2) aufweist, die eine Öffnung (3) mit Formschlussmitteln (4) hat, die mit komplementären Formschlussmitteln der Bremsscheibe (12) oder der Nabe (11) in Eingriff bringbar sind,
**dadurch gekennzeichnet,**
**dass** die Scheibe als Fixierscheibe (2) für den Magneten (6) an der Bremsscheibe (12) oder der Nabe (11) ausgelegt ist,
**dass** die Formschlussmittel (4) um die Öffnung (3) als senkrecht von der Fixierscheibe (2) abstehende Raststege (4) ausgebildet sind, und
**dass** im montierten Zustand diese Raststege (4) kraft- und/oder formschlüssig in eine Innenverzahnung (17) der Bremsscheibe (12) oder der Nabe (11) eingreifend ausgebildet sind.

2. Magnethalterung nach Anspruch 1,
**dadurch gekennzeichnet,**
**dass** die Fixierscheibe (2) integral und/oder einstückig mit den Raststegen (4) hergestellt ist.

3. Magnethalterung nach einem der Ansprüche 1 bis 2,
**dadurch gekennzeichnet,**
**dass** die Fixierscheibe (2) aus einem stanz- und biegbaren Material, insbesondere aus Edelstahl oder einem Blechmaterial von etwa 0,6 mm - 1 mm, speziell etwa 0,8 mm Stärke, hergestellt ist.

4. Magnethalterung nach einem der Ansprüche 1 bis 3,
**dadurch gekennzeichnet,**
**dass** ein den Magneten (6) aufnehmender Endbereich der Fixierscheibe (2) im montierten Zustand, insbesondere magnetisch, gegen die Bremsscheibe (12) angezogen wird oder anliegt.

5. Magnethalterung nach einem der Ansprüche 1 bis 4,
**dadurch gekennzeichnet,**
**dass** die Raststege (4) aus dem Material der Fixierscheibe (2) mit Hinterschnitt (26) ausgestanzt, mit einem senkrecht hochstehenden Mittelsteg (27) aufgebogen und mit einem endseitigen, gebogenen Endsteg (28) mit nach innen zeigender Endfläche (29) versehen sind.

6. Magnethalterung nach einem der Ansprüche 1 bis 5,
**dadurch gekennzeichnet,**
**dass** die Raststege (4) eine Ausrichtung und Konfiguration aufweisen, die einen Kraft- und/oder Formschluss mit der Verzahnung (17) der Bremsscheibe (12), insbesondere in deren Nabenöffnung (18), ermöglichen.

7. Magnethalterung nach einem der Ansprüche 1 bis 6,
**dadurch gekennzeichnet,**
**dass** im montierten Zustand die Raststege (4) mit ihrem Mittelsteg (27) formund/oder kraftschlüssig in eine Innenverzahnung (17) der Nabenöffnung (18) der Bremsscheibe (12) eingreifen.

8. Magnethalterung nach einem der Ansprüche 1 bis 7,
**dadurch gekennzeichnet,**
**dass** die Raststege (4) einen nach außen weisenden gebogenen Rundungsbereich als Gleit- und Rastfläche (33) mit einer Innenfläche der Nabenöffnung (18) der Bremsscheibe (12) aufweisen.

9. Magnethalterung nach einem der Ansprüche 1 bis 8,
**dadurch gekennzeichnet,**
**dass** die Höhe der Raststege (4) etwa der Höhe der Neigung (9) der Fixierscheibe (2) entspricht.

10. Magnethalterung nach einem der Ansprüche 1 bis 9,
**dadurch gekennzeichnet,**
**dass** der Magnet (6) adhäsiv und/oder formschlüssig in einer Magnetmulde (7) der Fixierscheibe platziert ist.
